# EUROPEAN PATENT SPECIFICATION

(11) **EP 0 381 999 B1**
(45) Date of publication and mention of the grant of the patent: **20.09.1995**
(21) Application number: 90101395.3
(22) Date of filing: 24.01.1990
(51) Int. Cl.: B23D 33/04, B26F 1/38

(54) **Machine for cutting sheet metal disks**
Kreisschere
Dispositif pour couper des disques en métal

(30) Priority: 06.02.1989 IT 333589
(43) Date of publication of application: 16.08.1990
(73) Proprietor: ELMA - MACCHINE PER LAMIERA di Fabbri Angelo e C. - Società in nome collettivo, I-Sasso Marconi (Bologna) (IT)
(72) Inventor: Fabbri, Angelo, I-40044 Pontecchio Marconi (Bologna) (IT)
(74) Representative: Modiano, Guido, Dr.-Ing.

(56) References cited:
- WO-A-84/00126
- WO-A-85/05313
- DE-A- 3 045 089
- DE-A- 3 605 761
- US-A- 1 353 526

## Description

The present invention relates to a machine for automatically cutting sheet metal disks.

As is known, dies to be mounted on adapted presses or disk-cutting machines are currently available for cutting sheet metal disks.

The use of press dies allows to operate directly on the sheet metal band. However, only disks with a relatively small diameter and thickness can be cut, since very high operating pressures would otherwise be required, with an unacceptable increase in the costs of the press and of the dies themselves.

Vice versa, most of the known disk-cutting machines allow to cut disks even with a large diameter and thickness. However, such known machines require the sheet metal band to be cut beforehand into square plates from which the individual disks are to be obtained. Such machines in fact are generally provided with a pair of counter-rotating blades which are adapted to cut the sheet metal, which is rotated about an appropriate center so as to provide the circular cut. In some machines the movement is transmitted directly to the sheet metal plates and the blades are free; in other machines the blades are motorized and rotate the sheet metal. In any case, the need to operate on square panels of sheet metal is evident for the above machines, since it is not possible to rotate the band.

The preliminary cutting of the square panels increases the operating time and cost of the product. This machining furthermore entails greater waste, since the frame of sheet metal which is left over from the square plate after extraction of the disk cannot be used adequately.

A further device for cutting circular holes in metal sheets is known from DE-A-3 605 761. In this known device a metal sheet band is processed by two rotating disk tools engaging the opposite faces of the band. In this way circular shaped parts can be cut from the metal sheet band. However, this known solution fails to provide for a satisfactory control to the thrust applied to the disk tools and the sheet to be cut.

Yet another known device for punching circular holes in a metal sheet is known from WO-A-8 400 126. This known device includes a plurality of cutting blades mounted on a rotatable crosspiece and interacting with a male circular template. However, this known device may cause flexing of the crosspiece, particularly in the case when large holes are punched from a metal sheet to be processed.

This document is the base of the preamble of claim 1.

The aim of the present invention is to solve the above described problem by providing a machine which allows to cut even large-size disks from a band of sheet metal with reduced operating times and limited cutting pressures by discharging the cutting thrust.

Within the scope of this aim, a further object of the present invention is to provide a machine for cutting sheet metal disks which is simple in concept, safely reliable in operation and suitable for providing a fully automatic production line.

This aim and this object are both achieved, according to the invention by the present machine for cutting sheet metal disks, as defined in claim 1. Dependent claims 2-9 concern preferred embodiments of the machine.

The details of the invention will become apparent from the detailed description of a preferred embodiment of the machine for cutting sheet metal disks, illustrated only by way of non-limitative example in the accompanying drawings, wherein:

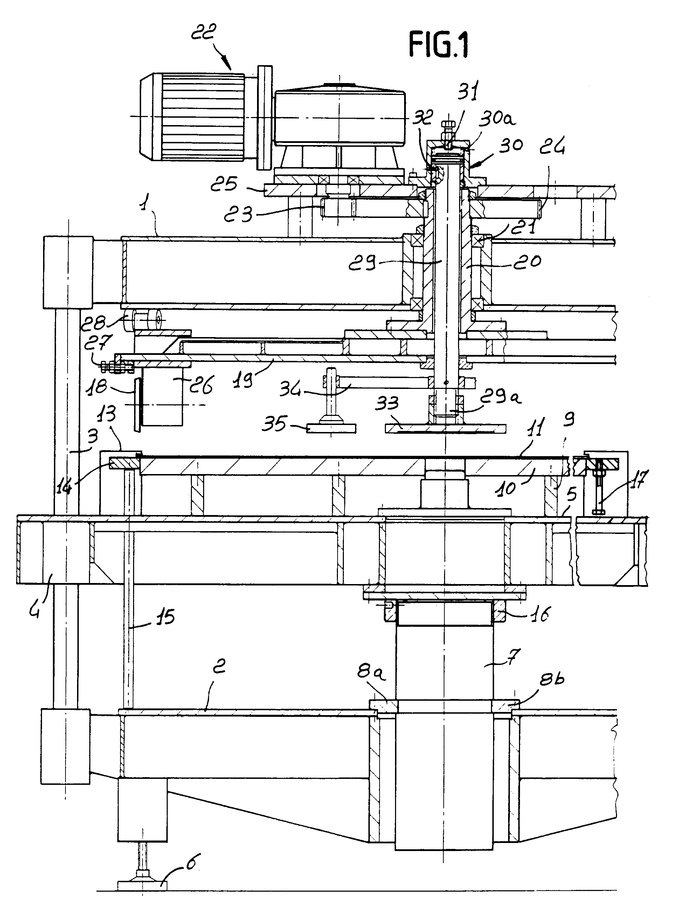

figure 1 is a vertical sectional view of the machine for cutting sheet metal disks;
figure 2 is a vertical sectional view of the pneumatic cylinder for the actuation of said movable bed;
figure 3 is a partial vertical sectional view of a different embodiment of the machine according to the present invention.

With particular reference to the above described figures, the machine for cutting sheet metal disks has a fixed frame constituted by an upper table 1 and by a base 2 which are rigidly coupled, at the vertices, by four columns 3. A movable bed 5 is slidably guided on the columns 3 by means of sleeves 4. The frame is furthermore provided with adjustable feet 6.

The movable bed 5 is rigidly associated with the stem of a double-action pneumatic cylinder 7. The cylinder 7 is fixed vertically, by means of a pair of half-rings 8a, 8b, to the base 2 of the fixed frame.

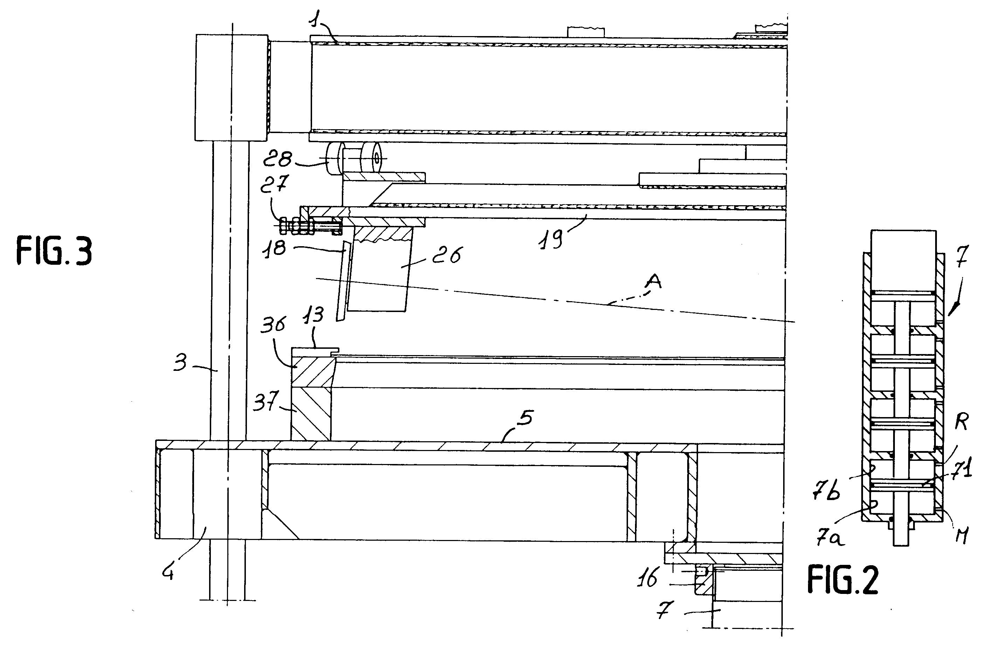

The pneumatic cylinder 7 is preferably of the kind with multiple chambers, as illustrated in figure 2. Said chambers, defined by partitions inside the cylindrical jacket, are provided with a related piston 71 which is slidable therein and is rigidly associated with the stem of the cylinder; each piston 71 defines in particular a delivery chamber 7a and a return chamber 7b respectively connected to a delivery port M and a return port R. In this manner it is possible to use, during the thrust step, all the delivery chambers 7a or, according to the requirements, only a part thereof, subdividing the delivery with adapted valve means arranged on the delivery ports M, whereas during the retraction step a single return chamber 7b is conveniently used and the other chambers are kept in communication with the atmosphere by means of the related ports R.

The movable bed 5 supports, by means of a plurality of spacers 9, a cutting template constituted by a male element in the shape of a circular plate 10 which is intended to support the sheet metal band 11 to be machined. The circular male element 10 is centered on a pivot 12 which rises from the bed 5.

The sheet metal band 11 is guided along its longitudinal edges by related guides 13 at the entry to and exit from the circular male element 10. Said guides 13 furthermore lock the band 11 by means of securing elements not illustrated in the drawing.

The male element 10 is peripherally surrounded by an extraction ring 14. Said extraction ring 14 is supported by columns 15 which slidably traverse the bed 5 and rest downwardly on the base 2. A threaded ring 16, screwed in an adjustable position on the cylinder 7, is adapted to limit the retraction stroke of the stem of said cylinder so as to align the male element 10 and the extractor 14 in idle position.

The extraction ring 14 is furthermore provided with screw elements 17 which protrude vertically downward and are adapted to limit the lowering of said extractor during the rise of the bed 5.

The circular male element 10 is adapted to co-operate in the cutting of the sheet metal 11, acting as fixed counter-blade, with a pair of circular blades 18 rotatably supported at the opposite ends of a crosspiece 19 which overlies said male element. Said crosspiece 19 is diametrically fixed to the lower end of a hollow shaft 20 which is rotatably mounted, by means of roller bearings 21, on the upper table 1 coaxially to the cylinder 7.

The hollow shaft 20 is adapted to be rotated by a gearmotor element 22; the gearmotor actuates a pinion 23 which meshes with a toothed crown 24 mounted on the hollow shaft 20. The gearmotor 22 is supported by a plate 25 which is fixed to the table 1; said plate 25 is conveniently adapted to accommodate a second gearmotor in case of very heavy machining.

The blades 18 are supported, with an axis of rotation which is radial to the hollow shaft 20, by a respective unit 26 which is fixed to the crosspiece 19 in a position which can be adjusted by means of a screw element 27. A pair of wheels 28 is mounted on the blade-holder unit 26 and engages the lower surface of the table 1. Said wheels 28 have the purpose of discharging the cutting thrust without subjecting to flexure the crosspiece 19, which merely transmits the rotation force of the gearmotor 22.

The hollow shaft 20 is longitudinally traversed by the stem 29 of a single-action hydraulic cylinder 30 which is rigidly associated with the plate 25. The cylinder 30 is axially provided with an adjustment screw 31 adapted to abut, at the end of its stroke, against the stem 29; the cylinder is furthermore provided with a transverse pin 32 which engages a longitudinal groove of the stem so as to prevent the rotation thereof about its own axis.

The cylinder 30 is provided, on the outlet hole 30a, with a valve, not illustrated in the drawing, which is adapted to lock the sliding of the stem 29 during the cutting step.

At its lower end, the stem 29 is provided with a threaded tang 29a on which a plate 33 is screwed; said plate is adapted to stop the penetration of the blades 18 at the required height. The plate 33 furthermore co-operates to lock the band 11 during the cutting step by pressing said band against the surface of the male element 10.

Finally, grip elements 35, such as for example electromagnets, suckers and the like, are fixed to the stem 29 by means of a transverse arm 34. Said grip elements 35 are intended to keep the disk cut from the sheet metal band 11 in contact with the plate 33, as described in greater detail hereafter.

The operation of the machine for cutting sheet metal disks is easily understandable from the above description. The movable bed 5 is raised, by means of the actuation of the cylinder 7, so as to move the sheet metal 11, arranged on the male element 10, to press against the circular blades 18. The plate 33 acts as abutment and secures the sheet metal band 11 onto the male element 10.

The blade-holder units 26 can be moved on the crosspiece 19 so as to provide the required play between the blades 18 and the male element 10.

If the sheet metal to be machined has a low thickness, the penetration of the blades 18 can be such as to allow complete cutting. In this case the disk is cut with a half turn of the crosspiece 19 which supports said blades. The crosspiece 19 is actuated by the gearmotor 22 which rotates the hollow shaft 20.

The valve arranged at the output of the cylinder blocks the hydraulic fluid, so that the stem 20 is prevented from rising again and opposes the thrust imparted by the cylinder 7 to the male element 10.

If instead the sheet metal to be machined is very thick, the penetration of the blades 18 is conveniently equal to half of the thickness. In this case, after a first half-turn of the crosspiece 19, the hydraulic fluid is caused to exit from the cylinder 30 so that the stem 29 which bears the plate 33 can rise again until it abuts against the adjustment screw 31; the male element 10 then rises so as to complete the penetration of the blades 18 into the sheet metal 11 to execute a second half turn of the crosspiece 19. The disk is thus cut with a complete turn of the crosspiece 19.

After cutting the disk, the bed 5 is again lowered and the ring 14 extracts the band from the male element 10. During the rise of the bed 5, the extraction ring 14 in fact rests by gravity on said bed by means of the screw elements 17 which limit the lowering of the extractor. During the descent of the bed, instead, the extraction ring 14 abuts against the columns 15 and therefore removes the waste.

When the bed 5 descends together with the male element 10, the cut disk is kept in contact with the plate 33 by the grip elements 35. A space is thus created between the lower surface of the cut disk and the upper surface of the male element, and means adapted for the removal of said disk, such as a blade or the like, can be inserted into said space. When said removal means are in place, the grip elements 35 allow the disk to drop, and the disk is then removed.

The described machine therefore allows to obtain the disks directly from the sheet metal band by rotating the cutting blade in a circular manner and by keeping said sheet metal motionless. In this manner the required pressure is small and the cutting time is sufficiently short.

The machine allows to easily vary the size of the cut disks by radially moving the blades 18 and accordingly changing the male element 10. The replacement of the male element 10 with another one of a different diameter is facilitated by the spacers 9 interposed between the bed 5 and said male element 10. The centering pin 12 allows the different circular male elements to be correctly placed.

It should be noted that the operating cycle is performed automatically by means of a single actuation. A device for removing the cut disk allows to provide a completely automatic production line by using an unwinding reel and a band straightener-feeder.

Figure 3 illustrates a different embodiment of the machine, wherein the cutting template is provided by an annular female element 36. Said annular female element 36 is supported on the movable bed 5 by means of a pair of lateral spacers 37.

In this case the blades 18 are intended to co-operate, in order to cut the sheet metal, with the inner edge of the annular female element 36. The blades 18 conveniently have an axis of rotation which is slightly inclined downward toward the axis of the machine, as illustrated in the drawings by the line A. The cut disk drops in the region underlying the female element 36, from which it can be removed by means of suitable removal means.

In the practical embodiment of the invention, the materials employed, as well as the shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Machine for cutting sheet metal disks, comprising: a bed (5) supporting a circular template (10) on which a sheet metal band (11) to be machined is supported; a pair of circular blades (18) rotatably supported at opposite ends of a crosspiece (19) overlying said bed (5) and being adapted to cooperate with said circular template (10) to cut said sheet metal band (11); and means (22) adapted to rotate said crosspiece (19) along an axis which is aligned with the axis of said circular template (10), characterized in that said bed (5) is a vertically movable bed, and in that said blades (18) are supported by a respective unit (26), said unit (26) being fixed to said crosspiece (19) and being provided with roller means (28) which engage the lower surface of an upper table (1), so as to discharge the cutting thrust without subjecting said crosspiece (19) to flexure.

2. Machine according to claim 1, characterized in that said crosspiece (19) is fixed diametrically at the lower end of a hollow shaft (20) which is rotatably mounted on said upper table (1) and is adapted to be rotated by a gearmotor element (22), said hollow shaft (20) being longitudinally traversed by the stem (29) of a hydraulic cylinder (30) which is provided, at its lower end, with a plate (33) adapted to abut against the upper surface of the sheet metal band (11) during the cutting step, thereby stopping the penetration of said blades (18) at the required height.

3. Machine according to claims 1 or 2, characterized in that said circular template is constituted by a male element (10) in the shape of a circular plate, supported by a plurality of spacers (9) on said movable bed (5) and being centered on a pivot (12) which rises from said bed (5).

4. Machine according to claim 3, characterized in that said circular male element (10) is peripherally surrounded by an extraction ring (14) supported by columns (15) which slidably traverse said movable bed (5) and rest downward on a fixed base (2).

5. Machine according to claim 4, characterized in that said extraction ring (14) is provided with screw elements (17) protruding vertically downward and being adapted to limit lowering of said extractor (14) during the rise of said movable bed (5).

6. Machine according to one or more of the preceding claims, characterized in that said blades (18) are supported by said respective unit (26) with an axis of rotation which is radial to the vertical actuation axis of said crosspiece (19), said unit (26) being fixed to said crosspiece (19) in an adjustable position.

7. Machine according to one or more of claims 2-6, characterized in that grip means (35), intended to retain the disk cut from the sheet metal band (11) in contact with said plate (33), are fixed to the stem (29) of said hydraulic cylinder (30) by means of a transverse arm (34).

8. Machine according to one or more of the preceding claims, characterized in that said circular template (10) is made in the shape of an annular female element (36) and is supported on said movable bed (5) by means of a pair of lateral spacers (37), said blades (18) being intended to cooperate, to cut the sheet metal, with the inner corner of said annular female element (36).

9. Machine according to one or more of the preceding claims, characterized in that said sheet metal band (11) is guided along its longitudinal edges, at the entry to and exit from said circular template (10), by related guides (13) provided with securing elements.

## Patentansprüche

1. Maschine zum Schneiden von Metallblechscheiben umfassend: ein Bett (5), das eine kreisförmige Schablone (10) trägt, auf der ein zu bearbeitendes Metallblechband (11) getragen ist; ein Paar kreisförmige Schneiden (18), die drehbar gestützt sind an gegenüberliegenden Enden eines Querträgers (19), der über dem Bett (5) liegt und geeignet ist, mit der kreisförmigen Schablone (10) zusammenwirken, um das Metallblechband (11) zu schneiden; und Mittel (22) geeignet zum Drehen des Querträgers (19) entlang einer Achse, die zu der Achse der kreisförmigen Schablone (10) ausgerichtet ist, dadurch gekennzeichnet, daß das Bett (5) ein vertikal beweglicher Tisch ist und daß die Schneiden (18) durch eine entsprechende Einheit (26) getragen sind, wobei die Einheit (26) an dem Querträger (19) befestigt ist und mit Rollmitteln (28) versehen ist, die mit der unteren Fläche eines oberen Tisches (1) zusammenwirken, um den Schneiddruck abzugeben, ohne den Querträger (19) einer Biegung auszusetzen.

2. Maschine nach Anspruch 1, dadurch gekennzeichnet, daß der Querträger (19) diametral am unteren Ende einer Hohlwelle (20) befestigt ist, die drehbar auf dem oberen Tisch (1) angebracht ist, und zum Drehen durch ein Getriebemotorelement (22) geeignet ist, wobei die Hohlwelle (20) längs vom Schaft (29) eines hydraulischen Zylinders (30) durchquert wird, der an seinem unteren Ende mit einer Platte (33) versehen ist, die geeignet ist, während des Schneidschrittes gegen die obere Oberfläche des Metallblechbandes (11) zu stoßen, wodurch das Eindringen der Schneiden (18) in der erforderlichen Höhe gestoppt wird.

3. Maschine nach Anspruch 1 oder 2, dadurch gekennzeichnet, daß die kreisförmige Schablone aus einem männlichen Element (10) in Form einer kreisförmigen Platte gebildet ist, die von einer Vielzahl von Abstandhaltern (9) auf dem beweglichen Bett (5) getragen ist und auf einem Drehpunkt (12) zentriert ist, der sich von dem Bett (5) erhebt.

4. Maschine nach Anspruch 3, dadurch gekennzeichnet, daß das kreisförmige männliche Element (10) peripher von einem Extraktionsring (14) umgeben ist, der von Stützen (15) getragen ist, die verschiebbar das bewegliche Bett (5) durchqueren und unten auf einer festen Basis (2) ruhen.

5. Maschine nach Anspruch 4, dadurch gekennzeichnet, daß der Extraktionsring (14) mit Schraubelementen (17) versehen ist, die vertikal nach unten hervorstehen und geeignet sind, das Absenken des Extraktors (14) während des Anhebens des beweglichen Bettes (5) zu begrenzen.

6. Maschine nach einem oder mehreren der vorhergehenden Ansprüche, dadurch gekennzeichnet, daß die Schneiden (18) von der entsprechenden Einheit (26) getragen sind mit einer Rotationsachse, die radial zu der vertikalen Antriebsachse des Querträgers (19) ist, wobei die Einheit (26) an dem Querträger (19) in einer einstellbaren Position befestigt ist.

7. Maschine nach einem oder mehreren der Ansprüche 2 - 6, dadurch gekennzeichnet, daß Greifermittel (35), die zum Halten der aus dem Metallblechband (11) ausgeschnittenen Scheibe in Kontakt mit der Platte (33) vorgesehen sind, am Schaft (29) des hydraulischen Zylinders (30) mittels eines Querarms (34) befestigt sind.

8. Maschine nach einem oder mehreren der vorhergehenden Ansprüche, dadurch gekennzeichnet, daß die kreisförmige Schablone (10) in Form eines ringförmigen weiblichen Elementes (36) ausgebildet ist und auf dem beweglichen Bett (5) mittels eines Paares seitlicher Abstandshalter (37) getragen ist, wobei die Schneiden (18), zum Schneiden des Metallblechs, zum Zusammenwirken mit der inneren Ecke des ringförmigen weiblichen Elementes (36) vorgesehen sind.

9. Maschine nach einem oder mehreren der vorhergehenden Ansprüche, dadurch gekennzeichnet, daß das Metallblechband (11) beim Eintritt und Austritt aus der kreisförmigen Schablone (10) durch zugehörige Führungen (13), die mit Sicherungselementen versehen sind, entlang seiner Längskanten geführt ist.

## Revendications

1. Machine pour couper des disques en métal comprenant : un bâti (5) supportant un gabarit(10) circulaire sur lequel repose une bande de feuille de métal (11) destinée à être usinée ; une paire de lames circulaires (18) montées à rotation aux extrémités opposées d'une traverse (19) surplombant ledit bâti (5) et étant conçues pour coopérer avec ledit gabarit (10) circulaire pour couper ladite bande dc feuille de métal (11) ; et des moyens (22) conçus pour entraîner en rotation ladite traverse (19) le long d'un axe aligné avec l'axe dudit gabarit circulaire (10), caractérisée en ce que ledit bâti (5) est un bâti déplaçable verticalement, et en ce que lesdites lames (18) sont supportées par un élément (26) respectif, ledit élément (26) étant fixé à ladite traverse (19) et étant pourvu de moyens de mulement (28) aptes à s'engager avec la surface inférieure d'une table supérieure (1), afin de reprendre la poussée de coupe, sans soumettre ladite traverse 19 à flexion.

2. Machine selon la revendication 1, caractérisée en ce que ladite traverse (19) est fixée diamétralement à l'extrémité inférieure d'un axe creux (20) monté à rotation sur ladite table supérieure (1) et conçu pour être entraîné en rotation par un ensemble (22) de moteur et engrenage, ledit axe (20) creux étant longitudinalement traversé par la tige (29) d'un cylindre hydraulique (30) qui est pourvu, à son extrémité inférieure, d'une plaque (33) apte à porter en butée contre la surface supérieure de la bande (11) de métal en feuille, lors de l'étape de coupe, stoppant ainsi la pénétration desdites lames (18) au niveau en hauteur désiré.

3. Machine selon l'une des revendications 1 ou 2, caractérisée en ce que ledit gabarit circulaire est constitué par un élément (10) mâle sous la forme d'une plaque circulaire, supportée par une pluralité d'entretoises (9) sur ledit bâti (5) déplaçable, et centré sur un pivot (12) qui fait saillie par rapport audit bâti (5).

4. Machine selon la revendication 3, caractérisée en ce que ledit élément (10) circulaire mâle est entouré sur sa périphérie par une bague (14) d'extraction supportée par des colonnes (15) qui traversent de manière coulissante ledit bâti (5) déplaçable et repose vers le bas sur une base fixe (2).

5. Machine selon la revendication 4, caractérisée en ce que ladite bague d'extraction (14) est pourvue d'éléments vissants (17) faisant saillie verticalement vers le bas et aptes à limiter l'abaissement dudit extracteur (14) lors de l'élévation dudit bâti déplaçable (5).

6. Machine selon l'une quelconques des revendications précédentes, caractérisée en ce que lesdites lames (18) sont supportées par lesdits éléments (26) respectifs avec un axe de rotation radial par rapport à l'axe d'entraînement vertical de ladite traverse (19), ledit élément (26) étant fixé à ladite traverse (19) selon une position réglable.

7. Machine selon l'une des revendications 2 à 6, caractérisée en ce que des moyens de blocage (35) optes à maintenir le disque coupé à partir de la bande (11) de feuille de métal en contact avec ladite plaque (33), sont fixés sur la tige (29) dudit cylindre hydraulique (30) au moyen d'un bras transversal (34).

8. Machine selon l'une des revendications précédentes, caractérisée en ce que ledit gabarit circulaire (10) est constitué sous la forme d'un élément (36) femelle annulaire et repose sur ledit bâti (5) déplaçable au moyen d'une paire d'entretoises (37) latérales, lesdits lames (18) étant destinées à coopérer, afin de couper la feuille de métal, avec le coin intérieur dudit élément (36) femelle annulaire.

9. Machine selon l'une des revendications précédentes, caractérisée en ce que la bande (11) de feuille de métal est guidée le long de ses bords longitudinaux, à l'entrée et à la sortie dudit gabarit (10) circulaire à l'aide de guides correspondants (13) pourvus d'organes de maintien.
